# EUROPEAN PATENT SPECIFICATION

(11) **EP 4 641 779 B1**
(45) Date of publication and mention of the grant of the patent: **05.08.2026**
(21) Application number: 25171662.7
(22) Date of filing: 22.04.2025
(51) Int. Cl.: H01M 50/107, H01M 50/109, H01M 50/152, H01M 50/153, H01M 50/593, H01M 50/179, H01M 50/181, H01M 50/188, H01M 50/559

(54) **BATTERY**
BATTERIE
BATTERIE

(30) Priority: 23.04.2024 KR 20240054324
(43) Date of publication of application: 29.10.2025
(73) Proprietor: SAMSUNG SDI CO., LTD., Yongin-si, Gyeonggi-do 17084 (KR)
(72) Inventor: Jang, Taewoong, 17084 Yongin-si, Gyeonggi-do (KR)
(74) Representative: Gulde & Partner

(56) References cited:
- WO-A1-2023/279230
- US-A1- 2023 011 273

## Description

### FIELD

Aspects of embodiments of the present disclosure relate to battery.

### BACKGROUND

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly including a positive electrode and a negative electrode, a case accommodating the same, and electrode terminals connected to the electrode assembly. Examples may be found in US 2023 011273 A1 or WO 2023 279230 A1.

When two materials for different electrodes in a secondary battery come into electrical contact with one another and thus an internal circuit short occurs, the temperature of the secondary battery may rapidly increase, and in serious cases, it may lead to a fire.

The above information disclosed in this Background section is for enhancement of understanding of the background of the present disclosure, and therefore, it may contain information that does not constitute related (or prior) art.

### SUMMARY

The invention is defined by the appended claims. The description that follows is subjected to this limitation. Any disclosure lying outside the scope of said claims is only intended for illustrative as well as comparative purposes.

Aspects of embodiments of the present invention provide a battery capable of preventing a short circuit due to contact with a conductive object.

However, the technical problem to be solved by the present disclosure is not limited to the above problem, and other problems not mentioned herein, and aspects and features of the present disclosure that would address such problems, will be clearly understood by those skilled in the art from the description of the present disclosure below.

As recited in claim 1, a battery includes an electrode assembly including a first electrode and a second electrode, a cylindrical can accommodating the electrode assembly, electrically connected to the first electrode, and having a first open surface, a cover plate coupled to the first open surface of the can and electrically connected to the first electrode, a terminal cap arranged on the cover plate in a state of being insulated from the cover plate and electrically connected to the second electrode, and a first insulating member arranged on a first surface of the cover plate and having a ring shape surrounding a periphery of the terminal cap.

According to some embodiments of the present invention, an inner diameter of the first insulating member may be greater than or equal to an outermost diameter of the terminal cap.

As recited in claim 1, the first insulating member is arranged at a preset interval with respect to an outermost side of the terminal cap.

According to some embodiments of the present invention, a height from a bottom to a top of the first insulating member may be less than or equal to a height from a top of the cover plate to a top of the terminal cap.

According to some embodiments of the present invention, an outer diameter of the first insulating member may be equal to an outer diameter of the cover plate.

According to some embodiments of the present invention, a through-hole may be formed in a central portion of the cover plate, and the terminal cap may include a terminal plate and an insertion portion protruding from a central portion of the terminal plate and be inserted into the through-hole.

According to some embodiments of the present invention, the terminal plate may be circular, and an inner diameter of the first insulating member may be greater than or equal to a diameter of the terminal plate.

According to some embodiments of the present invention, the first insulating member may be a hydrophobic insulating member.

According to some embodiments of the present invention, an outer diameter of the first insulating member may be less than an outer diameter of the cover plate.

As recited in claim 1, the first insulation member is in contact with only the cover plate of the battery.

According to some embodiments of the present disclosure, the battery may further include a second insulating member arranged between the cover plate and the terminal cap.

According to an embodiment of the present disclosure not covered by the appended claims, a battery may include an electrode assembly including a first electrode and a second electrode, a housing cup including a first reference surface and a first sidewall extending vertically from a circumference of the first reference surface, wherein the housing cup accommodates the electrode assembly, may be electrically connected to the first electrode and have a cylindrical shape with one open side, a housing top including a second reference surface and a second sidewall extending vertically from a periphery of the second reference surface, wherein the housing top may be electrically connected to the second electrode and has a cylindrical shape with one side open so as to cover the one open side of the housing cup and a part of the first sidewall, and a first insulating member arranged on an outer surface of the first sidewall of the housing cup and having a ring shape surrounding a periphery of an end portion of the second sidewall of the housing top.

In a further development of the embodiment not covered by the appended claims, a height of an uppermost end of the first insulating member may be less than or equal to a height of a bottom surface of the second sidewall of the housing top, based on a bottom surface of the housing cup.

Furthermore, the first insulating member may be arranged at a preset interval with respect to a bottom surface of the second sidewall of the housing top.

Additionally, an outer diameter of the first insulating member may be less than or equal to an outermost diameter of the housing top.

A lowermost end of the first insulating member may be positioned on the same plane as a bottom surface of the housing cup or a bottom surface of the first sidewall.

The first insulating member may be a hydrophobic insulating member.

A lowermost end of the first insulating member may be positioned between a bottom surface of the first sidewall and a bottom surface of the second sidewall.

The first insulation member may be in contact with the housing cup of the battery.

The battery may further include a second insulating member arranged between the first sidewall of the housing cup and the second sidewall of the housing top.

According to the invenion, an internal short circuit of a battery due to contact with a conductive object is prevented.

Moreover, an effect of preventing a short circuit by an insulating member may be exhibited while maintaining the energy density of the battery. This may contribute to miniaturization of batteries.

However, aspects and features of the present disclosure are not limited to those described above, and other aspects and features not mentioned will be clearly understood by a person skilled in the art from the detailed description, described below.

### BRIEF DESCRIPTION OF THE DRAWINGS

The following drawings attached to the present specification illustrate embodiments of the present invention as well as embodiments not covered by the appended claims.
FIG. 1 illustrates a perspective view showing an example of a battery according to an embodiment of the present invention.
FIG. 2 illustrates a cross-sectional view showing an example of the battery according to an embodiment of the present invention.
FIG. 3 illustrates a plan view showing an example of a cover plate used in an embodiment of the present invention.
FIG. 4 illustrates a plan view showing an example of a terminal cap used in an embodiment of the present invention.
FIG. 5 illustrates a plan view and a cross-sectional view, respectively, showing an example of a terminal cap according used in an embodiment of the present invention,
FIG. 6 illustrates a plan view showing an example of a battery according to an embodiment of the present invention.
FIG. 7 illustrates an enlarged view showing an example of a portion A of FIG. 2.
FIG. 8 illustrates a diagram showing an example in which short circuit of the battery is prevented by the first insulating member according to embodiments of the present invention.
FIG. 9 illustrates a cross-sectional view showing an example of a battery according to an embodiment not covered by the appended claims.
FIG. 10 illustrates a cross-sectional view showing an example of a housing cup according to an embodiment no covered by the appended claims.
FIG. 11 illustrates a cross-sectional view showing an example of a housing top according to an embodiment not covered by the appended claims.
FIG. 12 illustrates a cross-sectional view showing an example of a battery according to an embodiment not covered by the appended claims.

### DETAILED DESCRIPTION

Hereinafter, embodiments of the present invention will be described, in detail, with reference to the accompanying drawings.

The embodiments described in this specification and the configurations shown in the drawings are only some of the embodiments of the present invention. he scope of the invention is defined by the appended claims.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

A secondary battery according to one or more embodiments is a micro-sized secondary battery and may be a coin cell or a button cell but is not limited thereto and may be a cylindrical or pin-type battery.

The coin cell or button cell is a battery in the form of a thin coin or button and may refer to a battery having a ratio of height to diameter (height/diameter) of 1 or less but is not limited thereto. Because the coin cell or button cell is generally cylindrical, the cross section in the horizontal direction is generally circular. However, the cross section in the horizontal direction is not limited thereto and may have an elliptical or polygonal shape. The diameter may refer to a maximum distance in the horizontal direction of the battery, and the height may refer to a maximum distance in the vertical direction of the battery (e.g., distance from the flat bottom surface to the flat top surface of the battery).

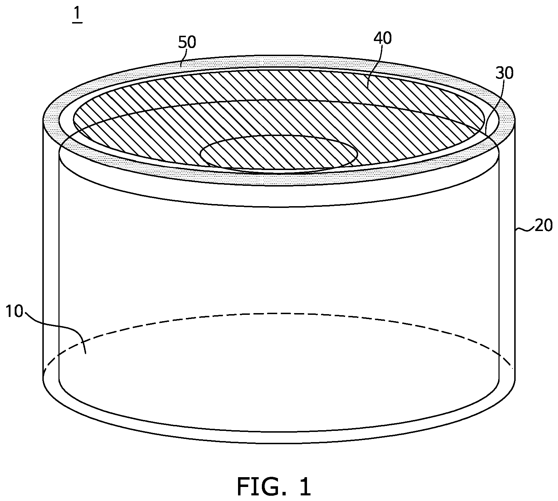

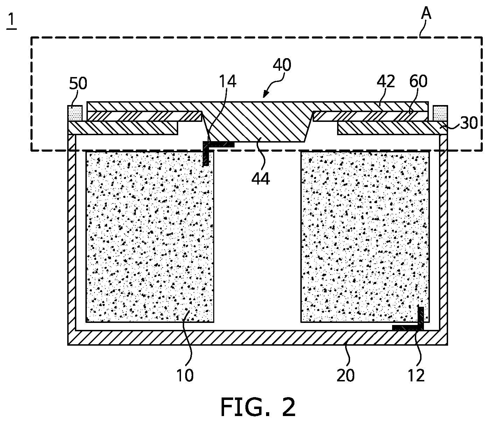

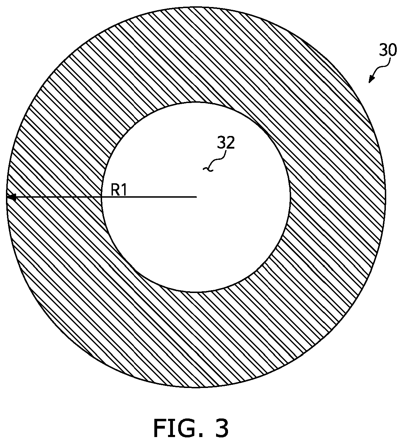

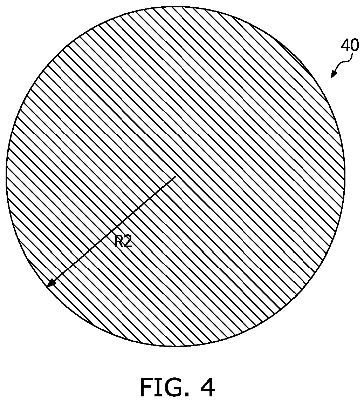

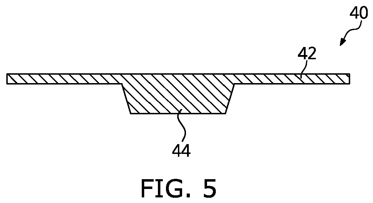

FIG. 1 illustrates a perspective view showing an example of a battery 1 according to an embodiment of the present invention, FIG. 2 illustrates a cross-sectional view showing an example of the battery 1 according to an embodiment of the present invention, and FIG. 3 illustrates a plan view showing an example of a cover plate 30 used in an embodiment of the present invention. In addition, FIGS. 4 and 5 illustrate a plan view and a cross-sectional view, respectively, showing an example of a terminal cap 40 used in an embodiment of the present invention. Referring to FIGS. 1 and 2, the battery 1 according an embodiment of the present invention may include an electrode assembly 10, a can 20, a cover plate 30, a terminal cap 40, a first insulating member 50, and a second insulating member 60.

The electrode assembly 10 includes a first electrode and a second electrode. For example, the electrode assembly 10 may be a wound electrode assembly 10 formed by arranging a separator, which is an insulator, between the first electrode and the second electrode and then winding the separator. However, the present disclosure is not limited thereto. As another example, the electrode assembly 10 may be a stacked electrode assembly 10 formed in a structure in which the first electrodes and the second electrode are alternately stacked with the separator therebetween, or may have any structure including the first electrode and the second electrode. Electrode tabs 12 and 14 may be formed separately and connected to an uncoated portion of the electrode, or may be formed by punching a part of the uncoated portion of the electrode.

The can 20 may form the overall exterior of the battery 1. As recited in claim 1, can 20 has a cylindrical shape with one open surface. For example, the can 20 may include a circular reference surface (or a bottom surface) and a sidewall extending vertically from the circumference of the reference surface. The surface of the can 20 facing the reference surface may be open. According to embodiments, the can 20 may be in the form of a flat cylinder (with one open surface) whose height (the shortest distance from the bottom to the top of the can 20) is less than the diameter of the reference surface. For example, the height of the can 20 and the diameter of the reference surface (e.g., equal to the diameter (2xR1) of the cover plate 30) may be formed at a ratio of about 5.4:12 to about 5.4:14. The electrode assembly 10 may be accommodated in the inner space of the can 20.

Referring to FIGS. 1 to 3, the cover plate 30 is coupled to the can 20 to cover one open surface of the can 20. For example, an edge of the cover plate 30 may be coupled to an opening of the can 20 (e.g., an edge of the open surface of the can 20). Specifically, the can 20 and the cover plate 30 may each include a conductive metal material, and the edge of the cover plate 30 and the opening of the can 20 may each be coupled to each other by metal joint (e.g., welding, brazing, soldering).

A through-hole 32 may be formed in the central portion of the cover plate 30. For example, the through-hole 32 may have a circular shape having the same center as that of the cover plate 30 but having a diameter less than that of the cover plate 30. For example, the cover plate 30 may have a ring shape having an outer diameter of 2xR1 and an inner diameter equal to the diameter of the through-hole 32.

The can 20 and the cover plate 30 have the same electrode. For example, the can 20 and/or the cover plate 30 may be in contact with the first electrode tab 12 connected to the first electrode (e.g., the negative electrode), and thus, as recited in claim 1, the can 20 and the cover plate 30 are electrically connected to the first electrode.

Referring to FIGS. 1, 2, 4, and 5, the terminal cap 40 is arranged on the cover plate 30 while being insulated from the cover plate 30.

According to embodiments, the terminal cap 40 may include a terminal plate 42 and an insertion portion 44. For example, the terminal plate 42 may have a circular shape having a diameter of 2xR2 (R2<R1), and the insertion portion 44 may protrude from the central portion of the terminal plate 42 so as to be inserted into the through-hole 32 of the cover plate 30.

The terminal cap 40 has an electrode that is different from that of the can 20 and the cover plate 30. For example, the insertion portion 44 of the terminal cap 40, which is inserted into the through-hole 32, may be in contact with the second electrode tab 14 connected to the second electrode (e.g., the positive electrode), and thus, as recited in claim 1, the terminal cap 40 is electrically connected to the second electrode. In embodiments, the terminal cap 40 may function as a terminal of the second electrode.

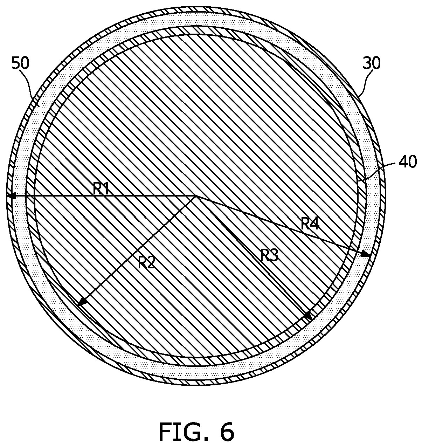

Referring to FIGS. 1 and 2, the first insulating member 50 is arranged on one surface of the cover plate 30. The first insulating member 50 having a ring shape surrounding the periphery of the terminal cap 40 is arranged on one surface of the cover plate 30. Specifically, the first insulating member 50 may have a ring shape having an inner diameter of 2xR3 and an outer diameter of 2xR4. This is described in more detail below with reference to FIG. 6.

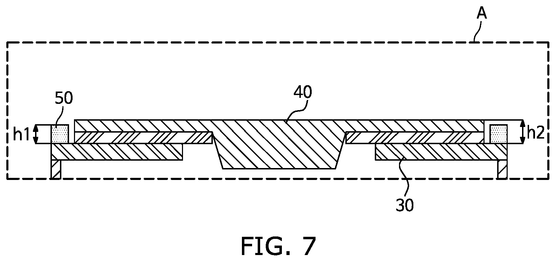

The first insulating member 50 is arranged at a preset interval with respect to the outermost side of the terminal cap 40. That is, the first insulating member 50 is not in contact with the terminal cap 40. The first insulating member 50 is in contact with only the cover plate 30 of the battery 1. The first insulating member 50 may prevent an internal short circuit of the battery 1 due to contact with an external conductive object. For example, the first insulating member 50 may prevent the cover plate 30 and the terminal cap 40, which have different electrodes, from being electrically connected to each other by an external conductive object. This is described in more detail below with reference to FIG. 7.

According to embodiments, the first insulating member 50 may be a hydrophobic insulating member 50. Accordingly, it is possible to prevent impurities including moisture from accumulating through a gap between the first insulating member 50 and the terminal cap 40 and to prevent the cover plate 30 and the terminal cap 40 from being short-circuited. Additionally or alternatively, in order to prevent impurities including moisture from accumulating through a gap between the first insulating member 50 and the terminal cap 40, the first insulating member 50 and the terminal cap 40 may be configured to be spaced apart from each other by a certain distance (e.g., about 500 µm, preferably about 1 mm) or more.

According to embodiments, the second insulating member 60 may be arranged between the cover plate 30 and the terminal cap 40. For example, the second insulating member 60 having a ring shape surrounding the periphery of the through-hole 32 of the cover plate 30 may be arranged between the cover plate 30 and the terminal cap 40. The second insulating member 60 may insulate between the cover plate 30 and the terminal cap 40 having different electrodes.

The first insulating member 50 and the second insulating member 60 may include any insulating material and may be applied (attached, arranged, applied, etc.) to the battery 1 in any form such as an insulating tape, an insulating sheet, or an insulating paste.

FIGS. 1 to 5 briefly illustrate an example of the battery 1 according to an embodiment of the invention and may further include other elements other than the illustrated elements. For example, one or more insulating members 50 (as a specific example, a third insulating member 50 that insulates a part of the electrode assembly 10 and the can 20, etc.) may be further arranged in the battery 1.

FIG. 6 illustrates a plan view showing an example of a battery according to an embodiment of the present invention. In the illustrated example, R1 may represent 1/2 of the outer diameter of the cover plate 30 (equal to the outer diameter of the can), R2 may represent 1/2 of the outermost diameter of the terminal cap 40 (e.g., the outer diameter of the terminal plate), and R3 and R4 may respectively represent 1/2 of the inner diameter of the first insulating member 50 and 1/2 of the outer diameter of the first insulating member 50. In embodiments, the outer circumference of the cover plate 30, the outermost circumference of the terminal cap 40, and the outer and inner circumferences of the first insulating member 50 may all be concentric circles with the same center.

Referring to FIG. 6, the outer diameter (2xR4) of the first insulating member 50 may be less than or equal to the outer diameter (2xR1) of the cover plate 30. In embodiments, when the first insulating member 50 is arranged on one surface of the cover plate 30 and the cover plate 30 is then coupled to the can, the outer diameter of the first insulating member 50 may be less than the outer diameter of the cover plate 30 in order to facilitate coupling. In other embodiments, when the cover plate 30 is coupled to the can and the first insulating member 50 is then arranged on one surface of the cover plate 30, the outer diameter of the first insulating member 50 may be equal to the outer diameter of the cover plate 30 in order to maximize the insulating effect by the first insulating member 50.

According to embodiments, the inner diameter (2xR3) of the first insulating member 50 is greater than the outermost diameter (2xR2) of the terminal cap 40. In embodiments, in order to prevent impurities including moisture from accumulating through the gap between the first insulating member 50 and the terminal cap 40, the inner circumference of the first insulating member 50 and the outermost circumference of the terminal cap 40 may be configured to be spaced apart from each other by a preset distance (e.g., about 500 µm, preferably about 1 mm) or more.

Although not illustrated, the outer diameter of the second insulating member may be less than the inner diameter (2xR3) of the first insulating member 50.

FIG. 7 illustrates an enlarged view showing an example of a portion A of FIG. 2. According to embodiments, a height h1 from the bottom to the top of the first insulating member 50 may be less than or equal to a height h2 from the top surface of the cover plate 30 to the top surface of the terminal cap 40. That is, the top of the first insulating member 50 arranged on the top surface of the cover plate 30 may not exceed the top of the terminal cap 40. Accordingly, the insulating effect by the first insulating member 50 may be exhibited while maintaining energy density.

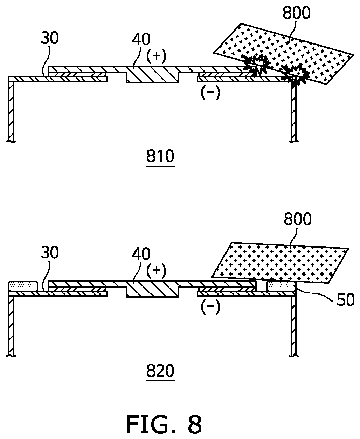

FIG. 8 illustrates a diagram showing an example in which short circuit of the battery is prevented by the first insulating member 50 according to embodiments of the present invention.

A first example 810 is a comparative example representing an example of a battery to which the first insulating member 50 is not applied. In the circumstance of a coin-type or button-type battery classified as an ultra-small battery, a step between a cover plate 30 and a terminal cap 40 is very small. Accordingly, when a conductive object 800 comes into contact with the battery, there is a very high probability that an accident will occur in which the cover plate 30 and the terminal cap 40 on which different electrodes are formed are short-circuited.

A second example 820 represents an example of a battery to which a first insulating member 50 according to embodiments of the present disclosure is applied. Even when the conductive object 800 comes into contact with the battery, the first insulating member 50 may prevent short circuit between the cover plate 30 and the terminal cap 40 on which different electrodes are formed.

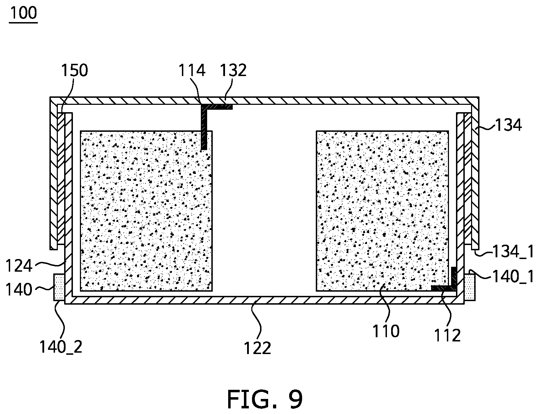

FIG. 9 illustrates a cross-sectional view showing an example of a battery 100 according to an embodiment not covered by the appended claims.

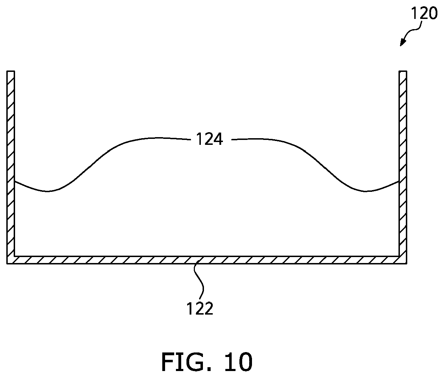

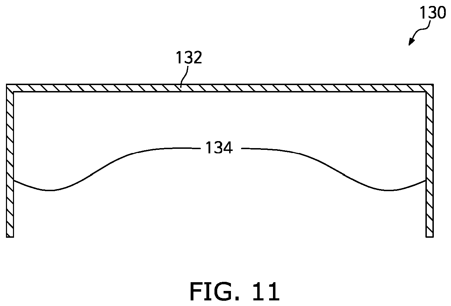

FIG. 10 illustrates a cross-sectional view showing an example of a housing cup 120 according to an embodiment not covered by the appended claims, and FIG. 11 illustrates a cross-sectional view showing an example of a housing top 130 according to an embodiment not covered by the appended claims. Referring to FIGS. 9 to 11, the battery 100 according to embodiments of the present disclosure may include an electrode assembly 110, a housing cup 120, a housing top 130, a first insulating member 140, and a second insulating member 150.

The electrode assembly 110 may include a first electrode and a second electrode. For example, the electrode assembly 110 may be a wound electrode assembly 110 formed by arranging a separator, which is an insulator, between the first electrode and the second electrode and then winding the separator. However, the present disclosure is not limited thereto. As another example, the electrode assembly 110 may be a stacked electrode assembly 110 formed in a structure in which the first electrodes and the second electrode are alternately stacked with the separator therebetween, or may have any structure including the first electrode and the second electrode. Electrode tabs 112 and 114 may be formed separately and connected to an uncoated portion of the electrode, or may be formed by punching a part of the uncoated portion of the electrode.

The housing cup 120 and the housing top 130 may form an overall exterior of the battery 100. According to embodiments, the housing cup 120 may have a cylindrical shape with one open surface. For example, the housing cup 120 may include a first reference surface 122 that is circular, and a first sidewall 124 extending vertically from the circumference of the first reference surface 122. The surface of the housing cup 120 facing the first reference surface 122 may be open. The electrode assembly 110 may be accommodated in the inner space of the housing cup 120.

The housing top 130 may have a cylindrical shape with one open surface so as to cover the open surface of the housing cup 120 and a part of the first sidewall 124. For example, the housing top 130 may include a second reference surface 132 that is circular, and a second sidewall 134 extending vertically from the circumference of the second reference surface 132. The surface of the housing top 130 facing the second reference surface 132 may be open. The second reference surface 132 of the housing top 130 may cover the open surface of the housing cup 120, and at least a part of the second sidewall 134 of the housing top 130 may cover a part of the first sidewall 124 of the housing cup 120. According to embodiments, the housing cup 120 and the housing top 130 may each include a conductive metal material.

The housing cup 120 and the housing top 130 may have different electrodes. For example, the housing cup 120 may be in contact with a first electrode tab 112 connected to a first electrode (e.g., a negative electrode), and thus, may be electrically connected to the first electrode. In embodiments, the housing cup 120 may function as a terminal of the first electrode. For example, the housing top 130 may be in contact with a second electrode tab 114 connected to a second electrode (e.g., a positive electrode), and thus, may be electrically connected to the second electrode. In embodiments, the housing top 130 may function as a terminal of the second electrode.

According to embodiments, the battery 100 may be in the form of a flat cylinder (with one open surface) whose height (e.g., the shortest distance from the bottom of the housing cup 120 to the top of the housing top 130) is less than the outermost diameter (e.g., the diameter of the second reference surface 132 of the housing top 130) as a whole. For example, the height and the outermost diameter may be formed at a ratio of about 5.4:12 to about 5.4:14.

The first insulating member 140 may be arranged on the outer surface of the first sidewall 124 of the housing cup 120. For example, the first insulating member 140 having a ring shape surrounding the periphery of the end portion of the second sidewall 134 of the housing top 130 may be arranged on the outer surface of the first sidewall 124 of the housing cup 120.

According to embodiments, based on the bottom surface of the housing cup 120, the height of an uppermost end 140_1 of the first insulating member 140 may be less than or equal to the height of a bottom surface 134_1 of the second sidewall 134 of the housing top 130. In embodiments, the first insulating member 140 may be arranged at a preset interval with respect to the bottom surface of the second sidewall 134 of the housing top 130. That is, the first insulating member 140 may not be in contact with the housing top 130. According to embodiments, the first insulating member 140 may be in contact with only the housing cup 120 of the battery 100 (e.g., the outer surface of the first sidewall 124 of the housing cup 120).

According to embodiments, a lowermost end 140_2 of the first insulating member 140 may be located between the bottom surface of the first sidewall 124 and the bottom surface 134_1 of the second sidewall 134. Alternatively, the lowermost end 140_2 of the first insulating member 140 may be located on the same plane as the bottom surface of the housing cup 120 or the bottom surface of the first sidewall 124.

The first insulating member 140 may prevent an internal short circuit of the battery 100 due to contact with an external conductive object. For example, the first insulating member 140 may prevent the housing cup 120 (e.g., the first sidewall 124 of housing cup 120) and the housing top 130 (e.g., the second sidewall 134 of the housing top 130), on which different electrodes are formed, from being electrically connected to one another by a conductive object.

According to embodiments, the first insulating member 140 may be a hydrophobic insulating member. Accordingly, it is possible to prevent impurities including moisture from accumulating through the gap between the first insulating member 140 and the housing top 130 (the second sidewall 134 of the housing tower 130) and to prevent the housing top 130 and the housing cup 120 from being short-circuited. Additionally or alternatively, in order to prevent impurities including moisture from accumulating through the gap between the first insulating member 140 and the housing top 130, the first insulating member 140 and the housing top 130 (specifically, the bottom surface of the second sidewall 134 of the housing top 130) may be configured to be spaced apart from each other by a preset distance (e.g., about 500 µm, preferably about 1 mm).

According to embodiments, the second insulating member 150 may be arranged between the first sidewall 124 of the housing cup 120 and the second sidewall 134 of the housing top 130. For example, the second insulating member 150 having a ring shape surrounding a part of the outer surface of the first sidewall 124 of the housing cup 120 may be arranged between the first sidewall 124 and the second sidewall 134. The second insulating member 150 may insulate between the housing cup 120 (specifically, the first sidewall 124 of the housing cup 120) and the housing top 130 (specifically, the second sidewall 134 of the housing top 130) having different electrodes. Based on the bottom surface of the housing cup 120, the height of the lowermost end of the second insulating member 150 may be higher than the height of the uppermost end 140_1 of the first insulating member 140.

The first insulating member 140 and the second insulating member 150 may each include any insulating material and may be applied (attached, arranged, applied, etc.) to the battery 1 in any form such as an insulating tape, an insulating sheet, or an insulating paste.

FIGS. 9 to 11 briefly illustrate an example of the battery 100 according to embodiments of the present disclosure, and may further include other elements other than the illustrated elements. For example, one or more insulating members (as a specific example, a third insulating member that insulates a part of the electrode assembly 110 and the housing cup 120, etc.) may be further arranged in the battery 100.

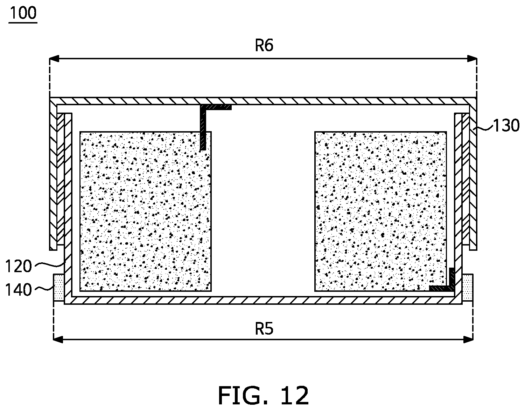

FIG. 12 illustrates a cross-sectional view showing an example of a battery 100 according to an embodiment not covered by the appended claims. Referring to FIG. 12, an outer diameter R5 of a first insulating member 140 may be less than or equal to an outermost diameter R6 of a housing top 130. That is, an outermost portion of the first insulating member 140 arranged on an outer surface of a first sidewall of a housing cup 120 may not exceed an outermost portion of the battery 100. Accordingly, the insulating effect by the first insulating member 140 may be exhibited while maintaining energy density.

The positive electrode active material may include a compound (lithiated intercalation compound) that is capable of intercalating and deintercalating lithium. Specifically, at least one of a composite oxide of lithium and a metal selected from cobalt, manganese, nickel, and combinations thereof may be used.

The composite oxide may be a lithium transition metal composite oxide. Specific examples of the composite oxide may include lithium nickel-based oxide, lithium cobalt-based oxide, lithium manganese-based oxide, lithium iron phosphate-based compound, cobalt-free nickel-manganese-based oxide, or a combination thereof.

As an example, the following compounds represented by any one of the following Chemical Formulas may be used. LiaA1-bXbO2-cDc (0.90≤a≤1.8, 0≤b≤0.5, and 0≤c≤0.05); LiaMn2-bXbO4-cDc (0.90≤a≤1.8, 0≤b≤0.5, and 0≤c≤0.05); LiaNi1-b-cCobXcO2-αDα (0.90≤a≤1.8, 0≤b≤0.5, 0≤c≤0.5, and 0<α<2); LiaNi1-b-cMnbXcO2-αDα (0.90≤a≤1.8, 0≤b≤0.5, 0≤c≤0.5, and 0<α<2); LiaNibCocL1dGeO2 (0.90≤a≤1.8, 0≤b≤0.9, 0≤c≤0.5, 0≤d≤0.5, and 0≤e≤0.1); LiaNiGbO2 (0.90≤a≤1.8 and 0.001≤b≤0.1); LiaCoGbO2 (0.90≤a≤1.8 and 0.001≤b≤0.1); LiaMn1-bGbO2 (0.90≤a≤1.8 and 0.001≤b≤0.1); LiaMn2GbO4 (0.90≤a≤1.8 and 0.001≤b≤0.1); LiaMn1-gGgPO4 (0.90≤a≤1.8 and 0≤g≤0.5); Li(3-f)Fe2(PO4)3 (0≤f≤2); or LiaFePO4 (0.90≤a≤1.8).

In the above Chemical Formulas, A is Ni, Co, Mn, or a combination thereof; X is Al, Ni, Co, Mn, Cr, Fe, Mg, Sr, V, a rare earth element or a combination thereof; D is O, F, S, P, or a combination thereof; G is Al, Cr, Mn, Fe, Mg, La, Ce, Sr, V, or a combination thereof; and L1 is Mn, Al, or a combination thereof.

The positive electrode active material may be, for example, a high nickel-based positive electrode active material having a nickel content of greater than or equal to about 80 mol%, greater than or equal to about 85 mol%, greater than or equal to about 90 mol%, greater than or equal to about 91 mol%, or greater than or equal to about 94 mol% and less than or equal to about 99 mol% based on 100 mol% of the metal excluding lithium in the lithium transition metal composite oxide. The high-nickel-based positive electrode active material may be capable of realizing high capacity and can be applied to a high-capacity, high-density rechargeable lithium battery.

A positive electrode for a rechargeable lithium battery may include a current collector and a positive electrode active material layer on the current collector. The positive electrode active material layer may include a positive electrode active material and may further include a binder and/or a conductive material(e.g., an electrically conductive material).

For example, the positive electrode may further include an additive that can serve as a sacrificial positive electrode.

An amount of the positive electrode active material may be about 90 wt% to about 99.5 wt% based on 100 wt% of the positive electrode active material layer. Amounts of the binder and the conductive material may be about 0.5 wt% to about 5 wt%, respectively, based on 100 wt% of the positive electrode active material layer.

The binder serves to attach the positive electrode active material particles well to each other and also to attach the positive electrode active material well to the current collector. Examples of the binder may include polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, as non-limiting examples.

The conductive material may be used to impart conductivity(e.g., electrical conductivity) to the electrode. Any material that does not cause chemical change(e.g., does not cause an undesirable chemical change in the rechargeable lithium battery) and conducts electrons can be used in the battery. Examples of the conductive material may include a carbon-based material such as natural graphite, artificial graphite, carbon black, acetylene black, ketjen black, a carbon fiber, a carbon nanofiber, and carbon nanotube; a metal-based material containing copper, nickel, aluminum, silver, etc., in a form of a metal powder or a metal fiber; a conductive polymer such as a polyphenylene derivative; or a mixture thereof.

AI may be used as the current collector, but is not limited thereto.

The negative electrode active material may include a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example. crystalline carbon, amorphous carbon or a combination thereof. The crystalline carbon may be graphite such as non-shaped, sheet-shaped, flake-shaped, sphere-shaped, or fiber-shaped natural graphite or artificial graphite. The amorphous carbon may be a soft carbon, a hard carbon, a mesophase pitch carbonization product, calcined coke, and the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, SiOx (0 < x < 2), a Si-Q alloy (where Q is selected from an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include Sn, SnO2, a Sn-based alloy, or a combination thereof.

The silicon-carbon composite may be a composite of silicon and amorphous carbon. According to an embodiment, the silicon-carbon composite may be in a form of silicon particles and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may exist dispersed in an amorphous carbon matrix.

The silicon-carbon composite may further include crystalline carbon. For example, the silicon-carbon composite may include a core including crystalline carbon and silicon particles and an amorphous carbon coating layer on a surface of the core.

The Si-based negative electrode active material or the Sn-based negative electrode active material may be used in combination with a carbon-based negative electrode active material.

The negative electrode for a rechargeable lithium battery may include a current collector and a negative electrode active material layer on the current collector. The negative electrode active material layer may include a negative electrode active material, and may further include a binder and/or a conductive material (e.g., an electrically conductive material).

For example, the negative electrode active material layer may include about 90 wt% to about 99 wt% of the negative electrode active material, about 0.5 wt% to about 5 wt% of the binder, and about 0 wt% to about 5 wt% of the conductive material.

The binder may serve to attach the negative electrode active material particles well to each other and also to attach the negative electrode active material well to the current collector. The binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, poly amideimide, polyimide, or a combination thereof.

The aqueous binder may be selected from a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrine, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resins, polyvinyl alcohol, and a combination thereof.

When an aqueous binder is used as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include Na, K, or Li.

The dry binder may be a polymer material that is capable of being fibrous. For example, the dry binder may be polytetrafluoroethylene, polyvinylidene fluoride, a polyvinylidene fluoride-hexafluoropropylene copolymer, polyethylene oxide, or a combination thereof.

The conductive material may be used to impart conductivity(e.g., electrical conductivity) to the electrode. Any material that does not cause chemical change(e.g., does not cause an undesirable chemical change in the rechargeable lithium battery) and that conducts electrons can be used in the battery. Non-limiting examples thereof may include a carbon-based material such as natural graphite, artificial graphite, carbon black, acetylene black, ketjen black, a carbon fiber, a carbon nanofiber, and a carbon nanotube; a metal-based material including copper, nickel, aluminum, silver, etc. in a form of a metal powder or a metal fiber; a conductive polymer such as a polyphenylene derivative; or a mixture thereof.

The negative current collector may include a copper foil, a nickel foil, a stainless steel foil, a titanium foil, a nickel foam, a copper foam, a polymer substrate coated with a conductive metal, or a combination thereof.

Although the present disclosure has been described above with respect to embodiments thereof, the present disclosure is not limited thereto and the scope of the invention is defined by the appended claims.

### [DESCRIPTION OF SOME REFERENCE SYMBOLS]

1: battery
10: electrode assembly
12: first electrode tab
14: second electrode tab
20: can
30: cover plate
40: terminal cap
50: first insulating member
60: second insulating member

## Claims

1. A battery (1) comprising:
an electrode assembly (10) comprising a first electrode and a second electrode;
a cylindrical can (20) accommodating the electrode assembly (10), electrically connected to the first electrode, and having a first open surface;
a cover plate (30) coupled to the first open surface of the can (20) and electrically connected to the first electrode;
a terminal cap (40) arranged on the cover plate (30) in a state of being insulated from the cover plate (30) and electrically connected to the second electrode; and
a first insulating member (50) arranged on a first surface of the cover plate (30) and having a ring shape surrounding a periphery of the terminal cap (40),
**characterized in that**
the first insulating member (50) is arranged at a preset interval with respect to an outermost side of the terminal cap (40), and
**in that** the first insulating member is in contact with only the cover plate (30) of the battery (1).

2. The battery (1) as claimed in claim 1, wherein an inner diameter of the first insulating member (50) is greater than or equal to an outermost diameter of the terminal cap (40).

3. The battery as claimed in any one of the preceding claims, wherein a height (h1) from a bottom to a top of the first insulating member (50) is less than or equal to a height (h2) from a top of the cover plate (30) to a top of the terminal cap (40).

4. The battery as claimed in any one of the preceding claims, wherein an outer diameter of the first insulating member (50) is equal to an outer diameter of the cover plate (30).

5. The battery as claimed in any one of the preceding claims, wherein a through-hole (32) is formed in a central portion of the cover plate (30), and
the terminal cap (40) comprises a terminal plate (42) and an insertion portion (44) protruding from a central portion of the terminal plate (42) and be inserted into the through-hole (32).

6. The battery as claimed in claim 5, wherein the terminal plate (42) is circular, and
an inner diameter of the first insulating member (50) is greater than or equal to a diameter of the terminal plate (42).

7. The battery as claimed in claim 1, wherein the first insulating member (50) is a hydrophobic insulating member.

8. The battery as claimed in any one of the preceding claims, wherein an outer diameter of the first insulating member (50) is less than an outer diameter of the cover plate (30).

9. The battery as claimed in any one of the preceding claims, further comprising a second insulating member (60) arranged between the cover plate (30) and the terminal cap (40).

## Patentansprüche

1. Batterie (1) umfassend:
eine Elektrodenanordnung (10), die eine erste Elektrode und eine zweite Elektrode umfasst;
eine zylindrische Dose (20), die die Elektrodenanordnung (10) aufnimmt, mit der ersten Elektrode elektrisch verbunden ist und eine erste offene Fläche aufweist;
eine Deckelplatte (30), die mit der ersten offenen Fläche der Dose (20) gekoppelt und mit der ersten Elektrode elektrisch verbunden ist;
eine Anschlusskappe (40), die auf der Deckelplatte (30) in einem Zustand angeordnet ist, in dem sie von der Deckelplatte (30) isoliert ist und mit der zweiten Elektrode elektrisch verbunden ist; und
ein erstes Isolierelement (50), das auf einer ersten Fläche der Deckelplatte (30) angeordnet ist und eine Ringform aufweist, die einen Umfang der Anschlusskappe (40) umgibt,
**dadurch gekennzeichnet, dass**
das erste Isolierelement (50) mit einem vorgegebenen Abstand in Bezug auf eine äußerste Seite der Anschlusskappe (40) angeordnet ist, und
dass das erste Isolierelement nur mit der Deckelplatte (30) der Batterie (1) in Kontakt steht.

2. Batterie (1) nach Anspruch 1, wobei ein innerer Durchmesser des ersten Isolierelements (50) größer oder gleich einem äußersten Durchmesser der Anschlusskappe (40) ist.

3. Batterie nach einem der vorhergehenden Ansprüche, wobei eine Höhe (h1) von einer Unterseite zu einer Oberseite des ersten Isolierelements (50) kleiner oder gleich einer Höhe (h2) von einer Oberseite der Deckelplatte (30) zu einer Oberseite der Anschlusskappe (40) ist.

4. Batterie nach einem der vorhergehenden Ansprüche, wobei ein äußerer Durchmesser des ersten Isolierelements (50) gleich einem äußeren Durchmesser der Deckelplatte (30) ist.

5. Batterie nach einem der vorhergehenden Ansprüche, wobei ein Durchgangsloch (32) in einem Mittelabschnitt der Deckelplatte (30) ausgebildet ist, und
die Anschlusskappe (40) eine Anschlussplatte (42) und einen Einführungsabschnitt (44) umfasst, der von einem Mittelabschnitt der Anschlussplatte (42) vorsteht und in das Durchgangsloch (32) eingeführt ist.

6. Batterie nach Anspruch 5, wobei die Anschlussplatte (42) kreisförmig ist, und
ein innerer Durchmesser des ersten Isolierelements (50) größer oder gleich einem Durchmesser der Anschlussplatte (42) ist.

7. Batterie nach Anspruch 1, wobei das erste Isolierelement (50) ein hydrophobes Isolierelement ist.

8. Batterie nach einem der vorhergehenden Ansprüche, wobei ein äußerer Durchmesser des ersten Isolierelements (50) kleiner als ein äußerer Durchmesser der Deckelplatte (30) ist.

9. Batterie nach einem der vorhergehenden Ansprüche, ferner umfassend ein zweites Isolierelement (60), das zwischen der Deckelplatte (30) und der Anschlusskappe (40) angeordnet ist.

## Revendications

1. Batterie (1) comportant :
un ensemble d'électrodes (10) comportant une première électrode et une deuxième électrode ;
un boîtier (20) cylindrique accueillant l'ensemble d'électrodes (10), connecté électriquement à la première électrode, et présentant une première surface ouverte ;
une plaque de recouvrement (30) couplée à la première surface ouverte du boîtier (20) et connectée électriquement à la première électrode ;
un capuchon de borne (40) agencé sur la plaque de recouvrement (30) dans un état étant isolé de la plaque de recouvrement (30) et connecté électriquement à la deuxième électrode ; et
un premier organe isolant (50) agencé sur une première surface de la plaque de recouvrement (30) et présentant une forme d'anneau entourant une périphérie du capuchon de borne (40),
**caractérisée en ce que**
le premier organe isolant (50) est agencé à un intervalle prédéfini par rapport à un côté le plus externe du capuchon de borne (40), et
**en ce que** le premier organe isolant est en contact uniquement avec la plaque de recouvrement (30) de la batterie (1).

2. Batterie (1) selon la revendication 1, dans laquelle un diamètre interne du premier organe isolant (50) est supérieur ou égal à un diamètre le plus externe du capuchon de borne (40).

3. Batterie selon l'une quelconque des revendications précédentes, dans laquelle une hauteur (h1) d'un bas à un haut du premier organe isolant (50) est inférieure ou égale à une hauteur (h2) d'un haut de la plaque de recouvrement (30) à un haut du capuchon de borne (40).

4. Batterie selon l'une quelconque des revendications précédentes, dans laquelle un diamètre externe du premier organe isolant (50) est égal à un diamètre externe de la plaque de recouvrement (30).

5. Batterie selon l'une quelconque des revendications précédentes, dans laquelle un trou traversant (32) est formé dans une partie centrale de la plaque de recouvrement (30), et
le capuchon de borne (40) comporte une plaque de borne (42) et une partie d'insertion (44) faisant saillie à partir d'une partie centrale de la plaque de borne (42) et pouvant être insérée dans le trou traversant (32).

6. Batterie selon la revendication 5, dans laquelle la plaque de borne (42) est circulaire, et
un diamètre interne du premier organe isolant (50) est supérieur ou égal à un diamètre de la plaque de borne (42).

7. Batterie selon la revendication 1, dans laquelle le premier organe isolant (50) est un organe isolant hydrophobe.

8. Batterie selon l'une quelconque des revendications précédentes, dans laquelle un diamètre externe du premier organe isolant (50) est inférieur à un diamètre externe de la plaque de recouvrement (30).

9. Batterie selon l'une quelconque des revendications précédentes, comportant en outre un deuxième organe isolant (60) agencé entre la plaque de recouvrement (30) et le capuchon de borne (40).
